# EUROPEAN PATENT APPLICATION

(11) **EP 4 233 541 A1**
(43) Date of publication of application: **30.08.2023**
(21) Application number: 22159230.6
(22) Date of filing: 28.02.2022
(51) Int. Cl.: A01N 1/02, A01N 25/10, A01N 25/26

(54) **CARRIER MATERIAL FOR LIVING BIOLOGICALS AND PREPARATION THEREOF**

(71) Applicant: Fachhochschule Bielefeld, 33619 Bielefeld (DE)
(72) Inventor: MUSKAT, Linda, 33613 Bielefeld (DE); PATEL, Anant, 33615 Bielefeld (DE)
(74) Representative: Kröncke, Rolf

(57) **Abstract**

The present invention relates in a first aspect to a carrier material for living biologicals, said carrier material contains biodegradable and water-absorbing material or polymer, combined with an oil and an oleogelator. In another aspect, the present invention relates to a carrier material combined with the living biologicals, the carrier material contains biodegradable and water-absorbing material or polymer, an oil combined with living biologicals. Furthermore, kits of parts for carrier material are provided as well as the use of carrier material for living biologicals in different types of applications including plant protection etc.

## Description

The present invention relates in a first aspect to a carrier material for living biologicals, said carrier material contains biodegradable and water-absorbing material or polymer, combined with an oil and an oleogelator. In another aspect, the present invention relates to a carrier material combined with the living biologicals, the carrier material contains biodegradable and water-absorbing material or polymer, an oil combined with living biologicals. Furthermore, kits of parts for carrier material are provided as well as the use of carrier material for living biologicals in different types of applications including plant protection etc.

### BACKGROUND TO THE INVENTION

Biological materials, such as beneficial microorganisms, including bacteria, fungi and nematodes, are useful alternatives to conventional agents for improvement and/or maintenance for soil and plant health, including the control of pests.

The biological material may be provided in various stages, namely, as living material, including spores, conidia, resting spores, hyphae, bacteria, eggs or other stages of development, but also in other forms including attenuated or killed biological materials. Living biological materials are sensitive to environmental exposure. Typically, a main problem of using biological materials is the problem of desiccation as well as killing by environmental conditions, including UV radiation. That is, the sensitivity of biological materials to environmental conditions is crucial in some aspects and, thus, application of the biological materials for example to be introduced into soil and for storing purposes is limited.

Moreover, for active agents based on chemical compounds, like chemical pesticides in agriculture or in other applications which are released into the environment and being harmful to the environment, more restrictions are given by the state and national regulations. Thus, biological materials also known as biocontrol agents, in particular, living biologicals are more and more in the focus in various applications including agricultural applications. That is, the biocontrol agents including fungi, bacteria, and nematodes are of interest for biologically based pesticides etc. For example, for combatting mosquitos and ticks, bacteria as well as useful fungi are more and more important as biocides in various applications.

A number of different formulations and carrier materials as well as encapsulation techniques have been described to allow application of the biological materials or biocontrol agents as living biologicals protected against negative environmental influences, thus, maintaining the efficacy and efficiency as well as the shelf storage of the components accordingly.

A main problem for effective employment of biocontrol agents is often the insufficient availability of fluids including water, since the presence of water is important to maintain viability of the living biologicals, otherwise, deficiency in water availability or fluid availability adverse the activity.

In the literature, various approaches have been described to improve water capacity of the biocontrol agents and, in particular, increasing the storage stability as well as the viability after application. For example, the development of superabsorber materials or other material based polymers have been described. These materials are described as allowing storage of a multitude of water while allowing sustained or delayed release of the water. Superabsorber are broadly used in various fields including sanitary products, like nappy and sanitary napping but also for improving the water capacity of soil in agriculture, for example, providing water to crops, while saving water at the same time.

Conventional superabsorber are typically petroleum based and harmful, partly cancerous, due to acrylic acids, which are applied in form of polyacrylates, e. g., the product STOCKOSORB^{®}. However, these conventional superabsorbers are not biologically degradable and, thus, environmental pollution in form of plastic materials takes place. Hence, there is an ongoing development of the use of renewable raw material, in particular, renewable material which is biodegradable in the environment.

Hence, there is a need for suitable carrier material for living biologicals applicable in the environment allowing biodegradation of the same after use.

### BRIEF DESCRIPTION OF THE PRESENT INVENTION

In a first aspect, the present invention relates to a carrier material for living biologicals, whereby the carrier material contains biodegradable and water-absorbing material or polymer, oil and oleogelator.

Namely, the present inventors have recognized that the carrier material according to the present invention allows to improve the water supply and maintenance of sufficient humidity for prolonging life of living biologicals and for development of living biologicals, like for improving sporulation of the living biologicals accordingly.

That is, sufficient sporulation over a long time is required to combat and control pests. Depending on the biological material, the particular stage of development for allowing infection and control of the pests is required. For example, for *Pandora sp. nov.,* a novel entomophthoralean species of the genus *Pandora,* the form as biocontrol agent for psyllid pest control requires a formulation that secures the virulence of the fungus when applied against the target insects. In particular, the provision of living biological biocontrol agents, like the entomopathogenic fungi, but also of other living biologicals based on bacteria, nematodes etc., over a prolonged time is required to improve its beneficial effects. The parameters relevant for allowing sufficient virulence and efficiency include the shelf life, growth and sporulation duration as well as the applicability of the living biologicals.

For a lot of biological agents, namely, living biological agents, a sufficient humidity is required. In particular, since application of the living biologicals is in nature, the material used for application should be biocompatible and biodegradable to allow release into the environment.

The present invention, namely, the carrier material described herein, allows to increase applicability, growth and sporulation duration as well as intensity after field application. The specific combination of the biodegradable and water absorbing material or polymer with the oil and the oleogelator enables to provide sufficient humidity for e. g. sporulation of fungi. Depending on the living biological, these living biologicals may be present in the carrier material as such or may be present encapsulated in suitable materials.

In an aspect of the present invention, the carrier material for living biologicals according to the present invention is a material wherein the biodegradable polymer is alkylcellulose, in particular, methylcellulose or carboxymethylcellulose, or starch derivatives. These compounds are known having high water absorbent properties.

Alternatively, the living biologicals may be provided as a further material, like being encapsulated or being present in fast rehydrating layers. Useful materials will be described below. That is, the material for encapsulation or including the living biologicals must be designed in a way to allow release of the virulent stages of the respective biologicals over a prolonged time, accordingly. For example, in case of fungi, conidia will be released into the environment, thus, infecting the pest accordingly.

Moreover, the oil present in the carrier material enabling delayed release of water is a plant-based oil or an animal based oil, mineral oil or microbial oil. In particular, with respect to the biocompatibility, it is desired that the oil is a plant-based oil which can be biodegraded easily in the environment and, typically, the degradation products are naturally occurring in nature.

The term "plant-based" and "vegetable" are used herein interchangeably.

In a further aspect, the oleogelator is a plant-based wax, like candelilla wax, lecithin, phytosterol, like sitosterol, oryzanol, alkylcellulose, chitin, protein, shellac, monoglyceride, sterole and so on.

Oleogelators are known in the art and are described e.g. in WO 2021/013917 A1. Namely, the term "oleogelator" as used herein, refers to a molecule being aimed to increase viscosity of non-polar liquids by building three-dimensional structures. That is, these molecules cause gelling of the non-polar liquid while increasing the viscosity thereof. That is, an oleogelator is a gelling agent of oleogels. Unless otherwise indicated, an oleogelator is one oleogelator or a combination of any two or more oleogelators.

The term "oleogel" as used herein, refers to a hardened or solified non-polar, typically liquid, solidified by gelling with an oleogelator.

As used herein, the term "non-polar liquid" refers to a liquid wherein the molecules have not the properties of a permanent dipole, that is, the charge distribution is homogenic in the molecule. Non-polar compounds are soluble in non-polar solvents like benzol but not in polar solvents like water.

As used herein, the term "comprising" or "containing" includes the embodiments of "consisting of". Unless otherwise indicated, the term "a" or "the" refers to one or more thereof.

In an embodiment of the present invention, the oleogelator is at least one oleogelator selected from the group of alkylcellulose, wax, in particular, plant-based wax, steorole, fatty alcohols, fatty acids, wax acids, wax ester, fatty acid ester, isoprene derivatives, mono-di- and/or tri-glyceride, lecithine, stearate, proteins, lignines, gelatine, polysaccharides, polysaccharides like chitin derivatives etc. The oleogelator may comprise at least one compound, in an embodiment at least two compounds are present.

In an embodiment, the alkylcellulose is an ethylcellulose. In case of a combination of oleogelators, an embodiment thereof is the use of alkylcellulose, like ethylcellulose, in combination with a plant-based wax. In a preferred embodiment, the combination is a combination of ethylcellulose with canauba wax or a combination of ethylcellulose with candililla wax. Other plant-based waxes preferred according to the present invention are berry wax, myrthe wax, bee wax, etc. These waxes will modulate the polarity and/or the release accordingly. Moreover, they can modulate the surface of the obtained gel formulation. Ethylcellulose and alkylcellulose in general are polymeric oleogelators which allow to regulate gelling. Depending on the oleogelator selected and the non-polar liquid selected as well as their proportions, the viscosity of the gel can be adjusted. Depending on the building of the 3D network, the viscosity may increase until solidification of the gel.

In an embodiment, the oleogelator is a combination of ethylcellulose and plant-based wax. Particularly preferred are a combination of ethylcellulose with plant-based wax including canauba wax and candelilla wax, whereby the amount is 0.1 to 20 % and the ratio is 0.01 to 0.1:2 weight-%.

Suitable unpolar liquids include plant-based, animal-based, microbial or mineral oils. Suitable material include sunflower oil, canola oil, sesame oil, olive oil, linseed oil, corn oil, palm oil, soybean oil, cocoa butter, fish oil, kerosene oil, rhizinus oil, nut oil, coconut oil, peanut oil, cottonseed oil, but also saturated monounsaturated and polyunsaturated fatty acids (PUFAs), such as arachidonic acid and fatty alcohols, such as octyldodecanol, or also co-solvents such as hexane, xylene, etc.

In an embodiment of the present invention, the carrier material for living biologicals is a material comprising carboxymethylcellulose as water absorbent polymer, a plant-based oil in combination with a plant-based wax as oleogelator. Thus, it is possible to provide simple bio-compatible and bio-degradable material applicable in nature.

Particular combinations for the carrier material depend on the living biological provided. With entomopathogenic fungi (EPF) actively discharging infective spores, the position of the formulated fungus on the surface is preferable. In the case of organisms that have to be digested by the target insect, an incorporation of the living biological into the carrier material is preferable.

As mentioned above, the living biological, e. g. suitable as a biocontrol agent, is supplied in a fast rehydrating layer or encapsulated in a fast degrading capsule. Suitable capsules and suitable encapsulation methods include known encapsulation methods with biocompatible and biodegradable components. Suitable components are for example the well-known calcium alginate encapsulation.

In an embodiment, the fast rehydrating layer is composed of xanthan. Other suitable materials include: cellulose and its derivatives, such as methylcellulose, carboxymethylcellulose, croscarmellose, cellulose fibres, starch and its derivatives, gellan gum, alginate, agar, pullulan, hygroscopic salts and composites thereof.

E.g. the fast rehydrating layer is provided in form of a xerogel or aerogel. As used herein, the term "xerogel" refers to highly porous material formed from a gel by drying and the term "aerogel" refers to porous material formed from a gel, in which the liquid component for the gel has been replaced with a gas without significant collapse of the gel structure.

That is, the present carrier material is a material suitable as a kind of super absorber and in a substitute of super absorber material described in the art.

In an embodiment, the carrier material for living biologicals according to the present invention comprises the hydrogel layer absorbing water, whereby said hydrogel layer absorbs water more rapidly than the carrier material containing the biodegradable and water absorbing material or polymer, oleogelator and oil forming a water absorbing layer according to the present invention. In an aspect, the two types of materials, the hydrogel and the carrier material as defined, form a bigel formulation when mixed with each other.

In another embodiment, the carrier material for living biologicals according to the present invention comprises besides the carrier material containing the biodegradable and water absorbing material or polymer, oil and oleogelator as defined herein, and, optionally, the hydrogel layer, additionally a water barrier layer. This water barrier layer is a layer allowing to delaminate the carrier material from other surfaces. In addition, the water barrier layer prevents run off of water from the carrier material accordingly. In an embodiment, the water barrier layer is composed of a biodegradable material, in particular, the water barrier essentially consists of insoluble alkylcellulose, in particular, ethylcellulose.

Specific embodiments of the carrier material for living biologicals will be described further in the examples below.

In a further aspect the present invention relates to a carrier material with (containing) living biologicals. This carrier material containing the living biologicals comprises a bio-degradable and water absorbing material or polymer, an oil and living biologicals.

In an aspect, the living biologicals are microorganisms. In particular, these living biologicals are suitable living biocontrol agents. These living biocontrol agents are suitable for combatting pests or suitable weed control compositions. In an embodiment, the living biologicals are fungi, microsporidia, microalgae, arthropods, arthropod eggs or nematodes. For example, the living biologicals are fungi, including entomopathogenic fungi. In particular, preferred fungi include entomophthoralean species, including *Pandora* and other suitable Entomophthorales. For example, these entomophthoralean species are suitable for pest control strategies of psyllids or aphids in orchards.

For example, in an embodiment of the present invention of the carrier material containing living biologicals, the living biologicals are present in granules or capsules or beads. Typically, these granules, capsules or beads are composed of biodegradable polymers. Suitable polymers include alginate, thus, the living biologicals are present in calcium alginate capsules or the like. Other suitable granules, capsules or beads include: spray dried living biologicals, oil-based formulations, including emulsions in which the cells are incorporated, electrospun fibers, silicates, clay or other stone based carrier materials on which the organisms are adsorbed, living biologicals coated on seeds, granules, capsules or beads made of starch, lignin, agar, gellan gum, milk powder, protein based materials, such as chitin/chitosan, casein, waste materials from wood or food industry and so on.

Moreover, the carrier material containing living biologicals according to the present invention as well as the carrier material for living biologicals according to the present invention may comprise additionally other components. These other components may include additional components including: preservatives, drying protectants, surfactants, fillers, pigments, vitamins, antioxidants, UV-active compounds, fungicides, bactericides, herbicides, semiochemicals, sugars, proteins, aminoacids, salts, permeation enhancer/suppressants, sticker/adhesives and so on.

The carrier material containing living biologicals or the carrier material for living biologicals may be provided dependent on the application the type or form of the carrier material containing living biological is selected. For example, in agriculture application, the material with living biological is suitable for spraying, spreading and application by hand. The material may be in form of a paste or granules or the like. For spreading and application e. g. by spreader useful for fertilizer spreader, the material with living biologicals may be in form of granules. The form is selected in view of the type of application desired.

In a further embodiment, kits of parts for a carrier material according to the present invention are provided. The kits of parts comprise a mixture of the components of the water absorbing layer in dry form. In an embodiment, namely, wherein the carrier material is a carrier material containing living biologicals, the kit of parts comprises further the living biologicals to be included into the carrier material accordingly.

The carrier material according to the present invention, namely, the carrier material for living biologicals according to the present invention or the carrier material containing the living biologicals according to the present invention are particularly useful in pest control field. For example, the material may be used as a plant protection agent, as insecticide, fungicide, bactericide, nematicide, herbicide, rodenticide, plant strengthener, insect reppellant or attractant, insect deterrent or insect arrestant as well as an adhesive.

The skilled person is well aware of the suitable type of application in field application. The type of application may be in the soil but may also be in the air. For example, the material may be adhered to parts of plants allowing the pest control accordingly. As said, it is required to provide optimal humidity conditions for allowing development and discharge of e. g. conidia in case of fungi to improve efficiency of pest infection. That is, suitable virulence of the fungus is necessary to demonstrate suitable mortality rates with the pest.

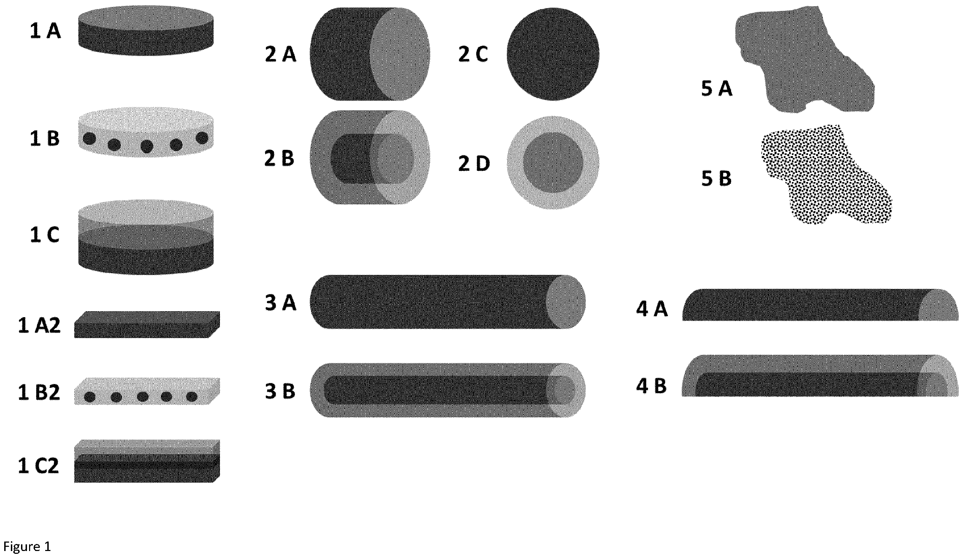

As shown in figure 1, various embodiments of the carrier material is possible, in particular being in form of a two-layered or three-layered embodiment. The first layer representing the biodegradable and water absorbing material or polymer is shown in black or dark grey. The second layer of the fast rehydrating material termed the hydrogel layer is shown in light grey.

Embodiments include: A film (1A & 1A2), a film with incorporated water retarding areas (1B & 1B2) or a layered film (1C & 1C2), a granule, spheronized granule or bead (2A-D), a fiber (3A/B), a paste (4A/B) for direct extrusion at the application side or a sprayable fluid (5A), or bigel (5B). that forms droplets after spray application. The bigel in 5b is formed by emulsifying the carrier material according to the present invention with the hydrogel, e.g. in form of a xerogel or aerogel.

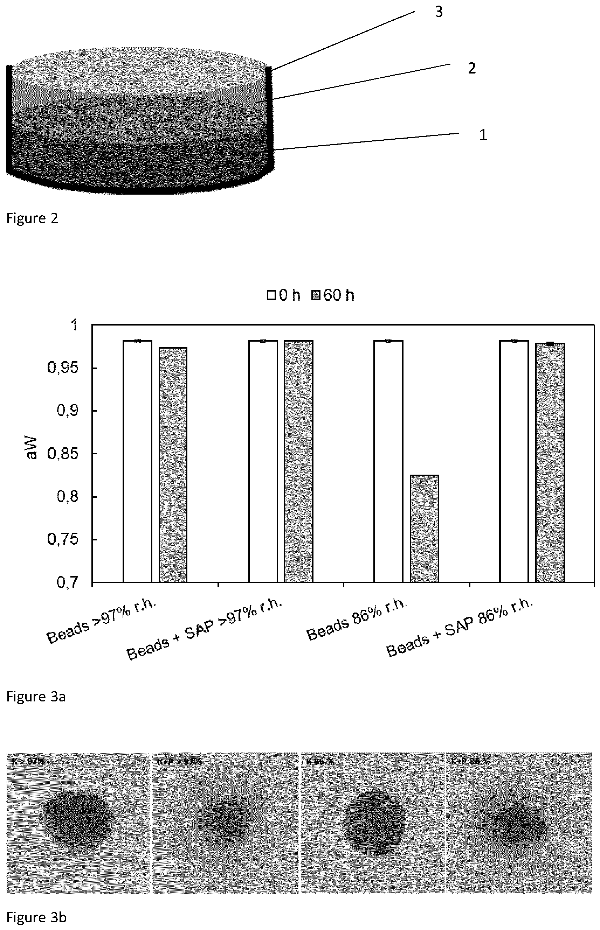

Figure 2 is an example of a 3 layered carrier material. In the middle the biodegradable and water absorbing material or polymer (dark grey) (1) with the second layer of the fast rehydrating material termed the hydrogel layer in light grey (2) on top and the water barrier layer at the bottom (black) (3).

The present invention will be described further by way of examples without limiting the same thereto.

In the following, an example of a pasteous carrier material is provided:

### Example 1

| Swelling paste - POSSIBLE COMPOSITION | | |
|---|---|---|
| **Plant-based oil (sunflower oil, sesame oil)** | **10 - 90 %** | |
| **Natural waxes (plant-based waxes, like candellila wax or carnauba wax)** | **0-20%** | |
| **Carboxymethylcellulose or other water soluble cellulose derivates** | **10 - 90 %** | |
| For example, the mixing ratio is 1:1 of the oily phase with the carboxymethylcellulose or, in case a wax is present, of the oil and wax to carboxymethylcellulose | | |
| The mixed components can be stored dry | | |
| Before/during application (or processing e.g. by extrusion to granules) to be supplemented by aqueous phase (in the monolayer version only water) or hydrogel layer (e.g. xanthan, +cellulose fibers), namely by 10 - 100 times the amount (w/w). | | |
| Preparation of the pasted carrier material can be conducted as follows:: | | |
| | 1. The plant-based oil is provided adding the wax thereto and heating said mixture under steering above the melting point of the wax and mixing the wax into the oil | |
| | 2. Thereafter, the carboxymethylcellulose is added to the oil-wax-mixture and mixing the same to obtain an oleogel | |
| | 3. Cooling the same and further processing for storage | |
| | 4. Depending on the presence or absence of other layers (hydrophilic layer, water barrier layer), the process is continued by preparing a aqeous phase (in case of no other layer water) or a second layer for overlaying the above oleogel and overlaying this with the second fast hydrating layer or mixing the same with the aqueous phase either consisting solely of water or the fast hydrating layer, mixing by steering and homogenizing it by introducing heat or other type of energy, allowing swelling for at least 12 to 24 hours of the material | |
| | 5. The material obtained may be used further by direct application or may be preportionated for later use. Alternatively, it may be extruded into granules for storage. | |
| | | |

| **Example 2** | | |
|---|---|---|
| **Plant-based oil (like sesame oil)** | | **48,5 %** |
| **Natural wax (like plant-based wax, candelilla wax or carnauba wax)** | | **1,5%** |
| **Carboxymethylcellulose (e. g. WALOCEL^{™} CRT 60000 GA (DuPont))** | | **50%** |
| This composition may be dried for storage if desired. | | |
| The mixture may be coated or overlayed with an aqueous phase consisting of xanthan (2 %) in water in amount of layer 1:layer 2 = 1:14 | | |

| Preparation: | | |
|---|---|---|
| | 1. The plant based oil is provided with a heatable stirring device whereby the candelilla wax (1.5 %; W/W) is added, the mixture is heated under stirring at 80 ° C, the meltingpoint of the candelilla wax, and the melted wax is mixed with the oil. | |
| | 2. The carboxymethylcellulose (50 % by weight) is added to the oil-wax-mixture and mixed to form the desired gelled paste material after cooling to room temperature | |
| | 3. Cooling the same, optionally in a form containing a water barrier material, like ethylcellulose, and cooling to room temperature. | |
| | 4. Optionally covering the same with a hydrogel as described in example 1, e. g. xanthan (2 %) hydrogel and allowing swelling for at least 12 to 24 hours of the material. | |

### Example 3

### Improved water retention to enable fungal sporulation

The carrier material for living biologicals obtained in example 2 has been used to examine water availability, namely, the material has been placed on the ceramic plate in an exsiccator in which the relative room humidity was maintained by distilled water or lowered by saturated salt solutions placed in the basin below the material.

As demonstrated, even at lower relative humidity of 86%, sporulation can be observed when using the paste material as carrier material for the sporulation of the isolate provided in capsules. The data provided shows the results for the encapsulated material (*Pandora* sp. nov. ARSEF13372) alone as well as combined with the carrier material according to the present invention at relative humidity's above 97 % and at 86 %. It is known that sporulation of the *Pandora* isolates occurs only at very high humidity, typically, above 97 % relative humidity. Hence, as demonstrated, the carrier material according to the present invention surprisingly allows sporulation even at relative humidity's of lower percentage, here 86 % relative humidity. Moreover, the water activity (aw) remains high as shown in Fig. 3.. Water activity (aw) is defined as the vapor pressure of water in a system after equilibration divided by that of pure water at the same temperature. Water activity is equal to equilibrium relative humidity divided by 100. aw correlates with the proportion of water efficiently available for biological systems, including microbial cells and is often referred to as the "free" or "available water" in a system.

Thus, the carrier material according to the present invention allows sporulation of the *Pandora* isolate at least for 60 hours at non saturated relative humidity conditions, here 86 % relative humidity. Moreover, it has been observed that the conidia germinate, mycelial growth can be observed and formation of conidiophores producing new conidia occurs.

Hence, the suitability of the carrying material according to the present invention on living biologicals is demonstrated.

## Claims

1. Carrier material for living biologicals, whereby the carrier material contains i) bio-degradable and water-absorbing material or polymer, ii) oil and iii) oleogelator.

2. The carrier material for living biologicals according to claim 1 wherein the biodegradable polymer is alkylcellulose, in particular, methylcellulose or carboxymethylcellulose, or starch derivatives.

3. The carrier material for living biologicals according to any one of the preceding claims, wherein the oil is a plant-based oil, an animal based oil, mineral oil or microbial oil.

4. The carrier material for living biologicals according to any one of the preceding claims, wherein the oleogelator is a plant-based wax, like candelilla wax, lecithin, phytosterol (like sitosterol, oryzanol), alkylcellulose, fatty acid, fatty alcohol, wax acid, wax ester, fatty acid ester, isoprene derivative, mono-, di-, triglyceride, sterate, shellac, protein or chitin.

5. The carrier material for living biologicals according to any one of the preceding claims, wherein the water absorbing material or polymer comprises carboxymethylcellulose as water absorbing polymer, and a plant-based oil in combination with a plant-based wax as oleogelator.

6. The carrier material for living biologicals according to any one of the preceding claims, comprising further a water barrier layer.

7. The carrier material for living biologicals according to claim 6, wherein the water barrier layer is composed of a bio-degradable material, in particular, the water barrier essentially consists of insoluble alkylcellulose, particularly ethylcellulose.

8. The carrier material for living biologicals according to any one of the preceding claims, further comprising a xerogel of a hydrogel layer absorbing water whereby said hydrogel layer absorbs water more rapidly than the carrier material containing the bio-degradable and water absorbing material or polymer, oleogelator and oil forming a water absorbing layer according to any one of claims 1 to 6.

9. The carrier material for living biologicals according to claim 8 comprising the water absorbing layer and the hydrogel in form of a bigel formulation.

10. A carrier material with living biologicals, whereby the carrier material contains i) bio-degradable and water absorbing materials or polymer, and ii) an oil with living biologicals present in and on the material.

11. A carrier material with living biologicals comprising a carrier material according to any one of claims 1 to 9 and living biologicals.

12. The carrier material containing living biologicals according to claim 10 or 11, wherein the living biologicals are present on the surface or within the water absorbing layer, and/or, if present, on or within the hydrogel layer.

13. The carrier material with living biologicals according to claims 10 to 12, whereby the living biologicals are microorganisms, in particular, fungi, bacteria, microsporidia, microalgae, arthropods, arthropod eggs or nematodes, preferably, the living biologicals are fungi, in particular, entomopathogenic fungi.

14. The carrier material with living biologicals according to any one of claims 10 to 13 whereby the living biologicals are present in granules or capsules or beads, composed of bio-degradable biopolymers, in particular, Ca-alginate capsules.

15. Kit of parts for a carrier material according to any one of claims 1 to 14, comprising at least a mixture of the components of the water absorbing layer in dry form, optionally a xerogel forming a hydrogel.

16. The kit of parts according to claim 15 comprising further living biologicals, in particular, present in granules or capsules or beads, composed of biodegradable biopolymers, in particular, Ca-alginate capsules.

17. A use of carrier material for living biologicals according to any one of claims 1 to 9 or of carrier material with living biologicals according to any one of claims 10 to 14 as a plant protection agent, insecticide, fungicide, bactericide, nematicide, herbicide, rodenticide, plant strengthener, insect repellent or attractant, insect deterrent, or insect arrestant, adhesive.
